# EUROPÄISCHE PATENTSCHRIFT

(11) **EP 0 316 742 B1**
(45) Veröffentlichungstag und Bekanntmachung des Hinweises auf die Patenterteilung: **13.04.1994**
(21) Anmeldenummer: 88118643.1
(22) Anmeldetag: 09.11.1988
(51) Int. Cl.: B24B 27/00

(54) **Maschine zum Fertigbearbeiten von Werkstücken**
Machine for finishing work pieces
Machine pour la finition de pièces

(30) Priorität: 19.11.1987 DE 8715326 U
(43) Veröffentlichungstag der Anmeldung: 24.05.1989
(73) Patentinhaber: Robotronic Maschinenbau GmbH, D-77933 Lahr (DE)
(72) Erfinder: Rast, Siegfried, D-Friesenheim 1 (DE)
(74) Vertreter: Schmitt, Hans, Dipl.-Ing.

(56) Entgegenhaltungen:
- EP-A- 0 035 267
- DE-A- 1 811 462
- GB-A- 751 657

## Beschreibung

Die Erfindung betrifft eine Maschine zum Fertigbearbeiten von Oberflächen von Werkstücken durch Schleifen, Polieren und/oder Entgraten mit einem vorzugsweise umlaufend angetriebenen Werkzeug, beispielsweise einer Schleif- oder Polierscheibe oder einem Schleifband, wobei zur Halterung und Lageänderung von mindestens zwei Werkstücken bei ihrer Bearbeitung um mindestens einen Freiheitsgrad bewegliche und angesteuerte Werkstückhalterungen vorgesehen sind, die Maschine 2 auf voneinander beabstandeten Achsen oder Halterungen angeordnete Werkzeuge aufweist, im Zwischenraum zwischen diesen Werkzeugen eine Tragvorrichtung für jeweils den Werkstücken zugewandte Werkstückhalterungen vorgesehen ist, die Werkzeuge in Richtung zu den Werkstückhalterungen hin und von diesen wegverstellbar sind und die Werkstückhalter einen gemeinsamen Antrieb haben.

Eine derartige Maschine ist aus der GB-A-751 657 bekannt. Dabei sind jedoch die Bearbeitungsmöglichkeiten an einem Werkstück beschränkt, weil diese vorbekannte Maschine eine Tragvorrichtung mit vier Halterungen für Werkzeuge aufweist, die alle in einer gemeinsamen Ebene angeordnet sind, so daß ein Verdrehen der Tragvorrichtung alle Halterungen in derselben Richtung verdreht. Eine Höhenverstellung oder eine Verstellung parallel zu den Werkzeugachsen ist dabei nicht vorgesehen und würde durch ein zusätzlich vor der Tragvorrichtung angordnetes und einen eigenen Antrieb aufweisendes Werkzeug verhindert.

Eine Maschine anderer Gattung, nämlich ein Bohr- und Fräswerk, mit welchem spiegelbildlich gestaltete Maschinenteile spanabhebend bearbeitet werden können, beschreibt die DE-A-1 811 462. Dabei sind mehrere zur Bearbeitung an Werkstücken dienende Arbeitspindeln paarweise mit nach außen von der Maschinenmitte fortweisenden Arbeitsvorschubbewegungen und Arbeitszustellbewegungen an einem horizontal verschiebbaren Ständer angeordnet. Die Werkstücke sind dabei fest eingespannt.

Der Erfindung liegt die Aufgabe zugrunde, eine Maschine der eingangs erwähnten Art zu schaffen und zu verbessern, bei welcher auch komplizierte Werkstücke mit gleichbleibender Qualität gleichzeitig bearbeitet werden können, wobei der in der Zeiteinheit bearbeitet Stückzahl bei gleichzeitiger Verbesserung des Preis-Leistungs-Verhältnisses durch eine möglichst rationelle Ansteuerung groß sein soll.

Die Lösung dieser Aufgabe besteht darin, daß die Werkzeuge synchron und dabei gegensinnig verschiebbar und/oder antreibbar sind, daß die Werkstückhalter spiegelsymmetrisch an ihrer gemeinsamen Tragvorrichtung höhenverstellbar angeordnet sind und zusätzlich die Tragvorrichtung parallel zu den Akten der Werkzeuge verfahr- oder verstellbar und festlegbar ist und daß die Bewegungen der Werkstückhalter und die Verstellbewegungen der Werkzeuge mechanisch synchronisiert sind.

Auf diese Weise ergibt sich eine Maschine, bei welcher aufgrund der gemeinsamen Tragvorrichtung und der synchronen, also für jeden Werkstückhalter ausnutzbaren Antriebe auch an komplizierten Werkstücken jeweils übereinstimmende, aber spiegelsymmetrisch erfolgende Bewegungen einfach und jeweils von einem einzigen Antrieb abgeleitet werden können. Es ergibt sich eine spiegelsymmetrische Anordnung der Arbeitsstellen, die eine entsprechend einfache gemeinsame Übertragung von Antriebskräften auf die bewegbaren Teile und somit eine Einsparung von Anttriebsmotoren erlaubt. In vorteilhafter Weise können dabei die Werkstückhalter mit den jeweiligen Werkstücken auch quer zu den Werkzeugen verstellt werden oder in den Bereich eines weiteren benachbarten Werkzeuges gebracht werden, so daß sich eine entsprechend große Zahl von Freiheitsgraden bei den Zustellbewegungen einerseits an den Werkzeugen und andererseits an den Werkstücken ergeben. Aus der mechanischen Synchronisierung der Bewegungen der Werkstückhalter und Verstellbewegungen der Werkzeuge ergibt sich, daß für die sechs Bewegungsachsen, obwohl sie jeweils doppelt vorhanden sind, nur jeweils ein Antriebsmotor erforderlich ist und auch die Steuerung nur einmal vorhanden sein muß. Es genügt also für jede an dem Werkstückhalter jeweils doppelt vorkommende und dabei spiegelsymmetrische Bewegung, beispielsweise die Verschwenkung zweier eingespannter Werkstücke, ein Antriebsmotor.

Die Tragvorrichtung für die Werkstückhalter kann dabei an einer Führung parallel zu den Achsen der Werkzeuge verfahr- oder verstellbar und festlegbar sein. Durch eine solche Führung läßt sich die entsprechende Verstellung der Tragvorrichtung präzise und einfach durchführen.

Eine besonders einfache und zweckmäßige Anordnung sowohl bezüglich der Werkstückhalterungen als auch der Werkzeuge ergibt sich, wenn die Werkzeugachsen der beabstandeten Werkzeuge oder ihre Antriebe parallel zueinander angeordnet sind. Dies bewirkt, daß die Bearbeitungsflächen der Werkzeuge einander unmittelbar zugewandt sind und die Werkstückhalter an ihrer Tragvorrichtung in dem Zwischenraum zwischen diesen Werkzeugen genau spiegelsymmetrisch voreinander abgewandt angeordnet sein können.

Dabei ist es zweckmäßig, wenn die beabstandeten Werkzeuge und die Führungen für Ihre Verstellung in Flucht miteinander angeordnet sind. Dadurch verlaufen auch ihre Verstellbewegungen praktisch in einer übereinstimmenden Ebene. Insgesamt ergibt sich dadurch eine spiegelsymmetrische Anordnung der Arbeitsstellen, die die entsprechend einfache gemeinsame Übertragung von Antriebskräften auf die bewegbaren Teile und somit die schon erwähnte Einsparung von Antriebsmotoren erlaubt.

Eine weitere Ausgestaltungsmöglichkeit kann darin bestehen, daß die Führung für die Tragvorrichtung aus dem Bereich der Werkzeuge heraus fortgesetzt ist und an ihrem Ende Platz für Paletten oder dergleichen Verpackungshilfsmittel und/oder für Übergabeeinrichtungen oder dergleichen vorgesehen ist. Somit können die Werkstückhalter auch dazu verwendet werden, die fertig bearbeiteten Werkstücke zu einer Verpackungseinrichtung oder dergleichen zu bringen und abzulegen beziehungsweise eventuell sogar dazu, die noch zu bearbeitenden Werkstücke aufzunehmen. Es ergibt sich also die Möglichkeit, auch den Übergang vor allem nach der Bearbeitung zu Automatisieren, was eine weitere Einsparmöglichkeit bedeutet.

Es sei noch erwähnt, daß beidseits der Tragvorrichtung jeweils mehrere, vorzugsweise verschiedene Werkzeuge, gegebenenfalls teilweise einschwenkbar, vorgesehen sein können. Dadurch wird es möglich, beispielsweise an dem einen dieser Werkzeuge das Werkstück zu polieren und dann mit einem unter Umständen an demselben Wagen oder Halter wie dieses Polierwerkzeug angeordneten einschwenkbaren weiteren Werkzeug abzuglänzen. Somit erlaubt die erfindungsgemäße Lösung eine Ausführungsform, bei der in einem einzigem Programm und einer einzigen Einspannung der Werkstücke diese mehreren unterschiedlichen Fertig-Bearbeitungen unterzogen werden können.

Eine weitere Ausgestaltung der Erfindung von ganz erheblicher Bedeutung kann darin bestehen, daß die gemeinsame Tragvorrichtung für die Werkstückhalter als Ständer auf einem an oder in dem Maschinengehäuse verfahrbaren Schlitten angeordnet ist und daß der Ständer als Vertikalführung für die Werkstückhalter dient.

Dabei ist es besonders vorteilhaft, wenn die Führungen für die Werkzeugverstellung und für den Schlitten der Tragvorrichtung unterhalb der Werkzeugachsen und etwa in einer gemeinsamen Ebene angeordnet sind. Somit können besondere Aufbauten oder Gerüste zum Aufhängen der Tragvorrichtung für die Werkstückhalter eingespart werden.

Nachstehend ist die Erfindung mit ihren ihr als wesentlich zugehördenden Einzelheiten anhand der Zeichnung in einem Ausführungsbeispiel näher beschrieben.

Es zeigt in schematisierter Darstellung:
- Fig. 1: eine Ansicht der erfindungsgemäßen Maschine, wobei die Blickrichtung der Orientierung der Werkzeugachsen entspricht, und
- Fig. 2: eine gegenüber Fig. 1 um 90° gedrehte Ansicht der Maschine.

Eine im ganzen mit 1 bezeichnete Maschine dient zum Fertigbearbeiten der Oberflächen von Werkstücken durch Schleifen, Polieren und/oder Entgraten und hat dazu umlaufend angetriebene Werkzeuge 2, im Ausführungsbeispiel Schleif- oder Polierscheiben. Zusätzlich oder stattdessen könnten aber beispielsweise auch Schleifbänder, Bürstenscheiben od.dgl. vorgesehen sein.

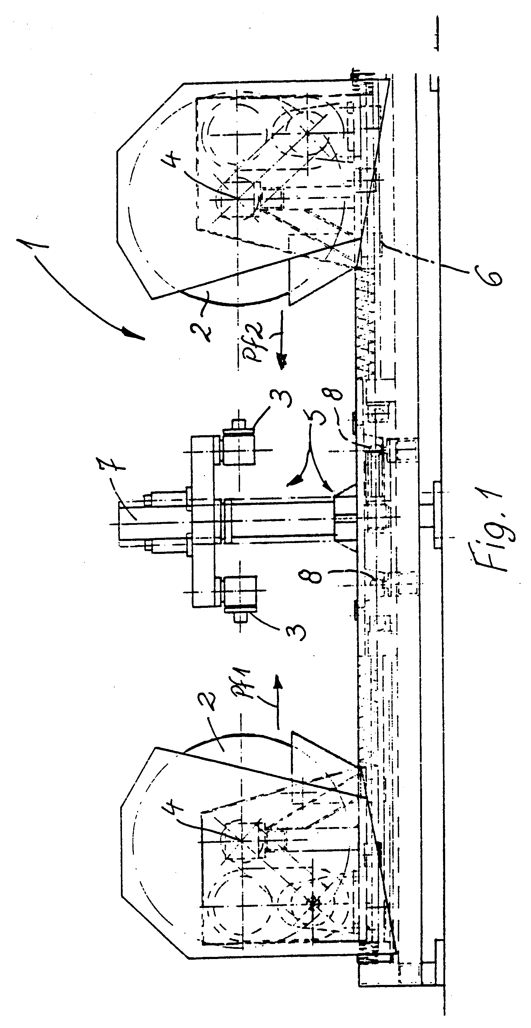

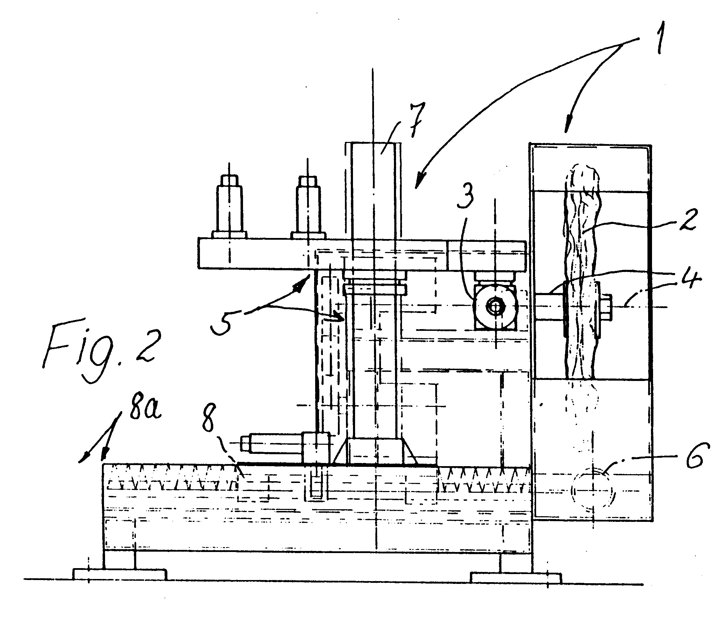

Zur Halterung und Lageänderung eines nicht näher dargestellten Werkstückes während seiner Bearbeitung sind dabei in bekannter Weise angesteuerte Werkstückhalter 3 vorgesehen. Dabei erkennt man in Fig. 1, daß die Maschine 1 zwei auf voneinander beabstandeten Achsen 4 angeordnete Werkzeuge 2 aufweist, daß im Zwischenraum zwischen diesen Werkzeugen 2 eine im ganzen mit 5 bezeichnete Tragvorrichtung für die den Werkzeugen 2 jeweils zugewandten Werkstückhalter 3 vorgesehen ist, welche aufgrund dieser gemeinsamen Anordnung an der Tragvorrichtung 5 für jede von ihnen durchführbare Bewegung jeweils nur einen gemeinsamen angesteuerten, vorzugsweise synchronen Antrieb benötigen, und daß die Werkzeuge 2 gemäß den Pfeilen Pf 1 und Pf 2 in Richtung zu den Werkstückhaltern 3 hin und auch wieder von diesen weg verstellbar gelagert sind. Die entsprechende Schiebeführung 6 für die Werkzeuge 2 und die sie tragenden Wagen od.dgl. ist in Fig. 2 angedeutet, aber auch in Fig. 1 erkennbar. Praktisch könnte man von einer Doppelschleif- oder Poliermaschine sprechen.

Dabei ist gemäß Fig. 1 eine spiegelsymmetrische Anordnung dadurch gewählt, daß die Werkzeuge 2 synchron und dabei gegensinnig und in gleicher Weise verschiebbar und antreibbar sind, die Werkstückhalter 3 spiegelsymmetrisch zueinander an der Tragvorrichtung 5 angeordnet und antreibbar sind und die Werkzeugachsen 4 parallel zueinander liegen. Ferner befinden sich die Werkzeuge 2 und ihre Führungen 6 in Flucht miteinander. Auf diese Weise können gemeinsame Antriebsmotoren für beide Werkzeuge 2 und/oder Werkstückhalter 3 bestmöglich ausgenutzt werden.

Die Werkstückhalter 3 sind an ihrer Tragvorrichtung 5 und einer dieser zugehörenden als Ständer dienenden Säule 7 höhenverstellbar und zusätzlich ist die Tragvorrichtung 5 über einen nicht näher dargestellten Schlitten an einer Führung 8 rechtwinklig zur Führung 6 der Werkzeuge 2 und parallel zu den Werkzeugachsen 4 verfahr- oder verstellbar und festlegbar. Nachdem außerdem die Werkstückhalter 3 selbst noch in mehreren Richtungen schwenkbar sind, lassen sich so praktisch alle nur denkbaren Bewegungen eines Werkstückes zur Bearbeitung seiner Oberfläche durchführen, wobei dies gleichzeitig mit zwei übereinstimmenden Werkstücken geschehen kann.

In Fig. 2 erkennt man noch, daß die Führung 8 für die Werkstückhalter 3 aus dem Bereich der Werkzeuge 2 heraus fortgesetzt ist und an ihrem Ende 8a Platz beispielsweise für Paletten od.dgl. Verpackungshilfsmittel oder auch für Übergabeeinrichtungen vorgesehen ist, so daß die Werkstückhalter 3 die fertig bearbeiteten Werkstücke automatisch in eine Verpackung oder auf eine solche Übergabeeinrichtung übergeben können.

Es sei noch erwähnt, daß an den Halterungen für die Werkzeuge 2 gegebenenfalls weitere Werkzeuge einschwenkbar vorgesehen sein könnten, die in einem Programm eine weitere Bearbeitung der von den Werkstückhaltern 3 getragenen Werkstücke erlauben.

Es sei noch erwähnt, daß die Bewegungen der Werkstückhalter 3 und die Verstellbewegungen der Werkzeuge 2 zweckmäßigerweise mechanisch synchronisiert sind, so daß für jede der verschiedenen Bewegungsachsen nur ein Motor erforderlich ist und die Ansteuerung entsprechend vereinfacht ist.

Die Führungen 6 und 8 für die Werkzeugverstellung und den Schlitten der Tragvorrichtung 5 befinden sich unterhalb der Werkzeugachsen 4 und im dargestellten Ausführungsbeispiel sogar unterhalb der Werkzeuge 2 und sind dabei in einer gemeinsamen Ebene angeordnet, so daß keinerlei Aufhängevorrichtungen für aufgehängte Werkstückhalter od.dgl. erforderlich sind.

Insgesamt ergibt sich eine Maschine 1, die gegenüber einer Einfachmaschine zwar einen höheren maschinellen Aufwand bedeutet, aber derart viele Vorteile und andere Einsparungen erlaubt, daß das Preis-Leistungs-Verhältnis durch eine entsprechende Erhöhung der Produktionsgeschwindigkeit erheblich verbessert ist.

## Patentansprüche

1. Maschine (1) zum Fertigbearbeiten von Oberflächen von Werkstücken durch Schleifen, Polieren und/oder Entgraten mit einem vorzugsweise umlaufend angetriebenen Werkzeug (2) beispielsweise einer Schleif- oder Poliermaschine oder einem Schleifband, wobei zur Halterung und Lageänderung von mindestens zwei Werkstücken bei ihrer Bearbeitung um mindestens einen Freiheitsgrad bewegliche und angesteuerte Werkstückhalterungen (3) vorgesehen sind, die Maschine (1) zwei auf voneinander beabstandeten Achsen oder Halterungen angeordnete Werkzeuge (2) aufweist, im Zwischenraum zwischen diesen Werkzeugen (2) eine Tragvorrichtung (5) für jeweils den Werkzeugen (2) zugewandte Werkstückhalterungen (3) vorgesehen ist, die Werkzeuge (2) in Richtung zu den Werkstückhalterungen (3) hin und von diesen wegverstellbar sind und die Werkstückhalter (3) einen gemeinsamen Antrieb haben, dadurch gekennzeichnet, daß die Werkzeuge (2) synchron und dabei gegensinnig verschiebbar und/oder antreibbar sind, daß die Werkstückhalter (3) spiegelsymmetrisch an ihrer gemeinsamen Tragvorrichtung höhenverstellbar angeordnet sind und zusätzlich die Tragvorrichtung (5) parallel zu den Achsen (4) der Werkzeuge (2) verfahr- oder verstellbar und festlegbar ist und daß die Bewegungen der Werkstückhalter (3) und die Verstellbewegungen der Werkzeuge (2) mechanisch synchronisiert sind.

2. Maschine nach Anspruch 1, dadurch gekennzeichnet, daß die Tragvorrichtung (5) für die Werkstückhalter (3) an einer Führung (8) parallel zu den Achsen (4) der Werkzeuge (2) verfahr- oder verstellbar festlegbar ist.

3. Maschine nach Anspruch 1 oder 2, dadurch gekennzeichnet, daß die Werkzeugachsen (4) der beabstandten Werkzeuge oder ihrer Antriebe parallel zueinander angeordnet sind.

4. Maschine nach einem der Ansprüche 1 bis 3, dadurch gekennzeichnet, daß die beabstandeten Werkzeuge (2) und die Führungen (6) für ihre Verstellung in Flucht miteinander angeordnet sind.

5. Maschine nach einem der Ansprüche 1 bis 4, dadurch gekennzeichnet, daß die Führung (8) für die Tragvorrichtung (3) aus dem Bereich der Werkzeuge (2) heraus fortgesetzt ist und an ihrem Ende Platz für Paletten od.dgl. Verpackungshilfsmittel und/oder für Übergabeeinrichtungen od.dgl. vorgesehen ist.

6. Maschine nach einem der vorstehenden Ansprüche, dadurch gekennzeichnet, daß beidseits der Tragvorrichtung (3) jeweils mehrere, vorzugsweise verschiedene Werkzeuge (2), ggfs. teilweise einschwenkbar, vorgesehen sind.

7. Maschine nach einem der Ansprüche 1 bis 6, dadurch gekennzeichnet, daß die gemeinsame Tragvorrichtung (5) für die beiden Werkstückhalter (3) als Ständer auf einem an oder in dem Maschinengehäuse verfahrbaren Schlitten angeordnet ist, und daß der Ständer als Vertikalführung für die Werkstückhalter (3) dient.

8. Maschine nach einem der Ansprüche 1 bis 7, dadurch gekennzeichnet, daß die Führungen (8, 9) für die Werkzeugverstellung und für den Schlitten der Tragvorrichtung (5) unterhalb der Werkzeugachsen (4) und etwa in einer gemeinsamen Ebene angeordnet sind.

## Claims

1. Machine (1) for the finishing grinding of the surfaces of pieces undergoing machining by trimming, scouring and/or deburring with a tool (2) preferably with circular start, for example with abrasive belt. For the support and the changing of the minimum position of the two pieces being machined, moving supports, commanded with not less than one degree of tolerance are provided during grinding. The machine (1) has two tools (2) arranged on pins spaced from each other or on mountings. In the space between the said tools (2) a bearing device (5) is provided for each workpiece rest (3) turned towards each tool (2). The tools (2) are in a position that permits approaching of or withdrawal from workpiece rests (3), which have a single command distinguished by the tools (2) which are desplaceable and/or startable synchronously and simultaneously opposed workpiece rests (3) which are arranged on their mutual bearing device with mirror symmetry and of adjustable height. Also, the bearing device (5) may be displaced, regulated and fixed parallel to the pins (4) of tools (2). The movements of the workpiece rests (3) and the movements of the tools (2) are mechanically synchronized.

2. According to right 1, the machine is distinguished by the fact that the bearing device (5) for the workpiece rests (3) may be fixed so that it may be displaced or adjustable on a guide (8) parallel to the pins (4) of tools (2).

3. According to rights 1 or 2, the machine is distinguished by the fact that the pins (4) of the spaced tools or their commands are arranged parallel to each other.

4. According to one of the rights 1 to 3, the machine is distinguished by the fact that the spaced tools (2) and the guides (6) are arranged together and aligned through their adjustment.

5. According to one of the rights from 1 to 4, the machine is distinguished by the fact that the guides (8) for the bearing device (3) continues beyond the tools (2) and that at its ends provision has been made for the arrangement of pallets or similar, auxiliary materials for packing and/or preparation for shipment or the like.

6. According to one of the foregoing rights, the machine is distinguished by the fact that on both sides of the bearing device (3) there are provided several tools which are preferably different (2) and which are possibily and partially convertible.

7. According to one of the rights 1 to 6, the machine is distinguished by the fact that for both the workpiece rests (3), the mutual bearing device (5) is arranged as a support on a sliding slide which is arranged inside or outside the machine housing. The said support serves as vertical guide for the workpiece rests (3).

8. According to one of the rights 1 to 7, the machine is distinguished by the fact that, for the displacement of the tools and for the bearing device slide (5), the guides (8,9) are arranged under the pins of tools (4) and on a single plane.

## Revendications

1. Machine (1) pour l'achèvement de la rectification de la sur face des pièces à usiner par affûtage, polissage et/ou ébavurage avec un outil (2), préférablement à mouvement circulaire, comme par exemple une bande abrasive.Pour le soutien et le changement de la position d'un minimum de deux pièces à usiner on a prévu pendant la rectification des porte-pièces (3) mobiles et gérés avec un minimum d'un degré de tolérance. La machine (1) est pourvue de deux outils (2) fixes sur des axes ou des soutiens placés à une certaine distance l'un de l'autre. Dans l'espace compris entre ces outils (2) on a prévu un soutien (5) pour chaque porte-pièce (3), chaque soutien étant orienté vers un outil (2). Les outils (2) se trouvent dans une position qui leur permet de se déplacer, s'approchant ou s'éloignant des pièces à usiner (3); ils sont tous pilotés par un seul système, caractérisé par le fait que les outils (2) peuvent être deplacés et/ou entraînes de manière synchronique et dans des sens opposés et que les porte-pièces (3) sont placés sur leur soutien commun de façon symétriquement spéculaire, leur hauteur pouvant être réglée. Encore, le soutien (5) peut être déplacé, réglé et fixé parallèlement aux axes (4) des outils (2). Les mouvements des porte-pièces (3) et les déplacements des outils (2) sont synchronisés mécaniquement.

2. D'après le droit 1., la machine est caractérisée par le fait que le soutien (5) des porte-pièces (3) peut être fixé à une glissière (8) parallèle aux axes (4) des outils (2), de façon à pouvoir être deplacé ou réglé.

3. D'après le droit 1 ou 2, la machine est caractérisée par le fait que les axes (4) des outils, écartés l'un de l'autre, ou bien leurs systèmes d'entraînement sont disposés parallèlement l'un par rapport à l'autre.

4. D'après un des droit 1 à 3, la machine est caractérisée par le fait que les outils (2) écartés l'un de l'autre et les glissières (6) sont alignés pour le réglage.

5. D'après un des droit 1 à 4, la machine est caractérisée par le fait que la glissière (8) du porte-pièce (3) continue même hors de la zone des outils (2) et qu'à son bout on peut prévoir un systeme de palettisation, du matériel pour l'emballage ou bien un poste d'expédition ou quelque chose de similaire.

6. D'après un des droits qui précèdent, la machine est caractérisée par le fait qu'aux deux côtés des porte-pièces (3) on a prévu des outils (2) préférablement différents, qui peuvent éventuellement substituer en partie les outils originels.

7. D'après un des droits 1 à 6, la machine est caractérisée par le fait que le soutien commun (5) des porte-pièces (3) est placé dans un chariot installé à l'interieur ou bien à l'exterieur du corps de la machine. Ce support sert de guide vertical pour les porte-pièces (3).

8. D'après un des droits 1 à 7, la machine est caractérisée par le fait que les glissières permettant le déplacement des outils et du chariot du soutien (5) se trouvent sur le même plan au-dessous des axes des outils (4).
